# EUROPEAN PATENT SPECIFICATION

(11) **EP 1 636 512 B1**
(45) Date of publication and mention of the grant of the patent: **24.12.2008**
(21) Application number: 04736285.0
(22) Date of filing: 07.06.2004
(51) Int. Cl.: F16F 15/20, F02B 67/06, B60K 25/00

(54) **ENGINE-DRIVEN VEHICLE**
MOTORGETRIEBENES FAHRZEUG
VEHICULE MOTORISE

(30) Priority: 11.06.2003 SE 0301694
(43) Date of publication of application: 22.03.2006
(73) Proprietor: Scania CV AB (publ), 151 87 Södertälje (SE)
(72) Inventor: LÖF, Per-Erik, S-640 33 Bettna (SE); NAHAS, Joseph, S-126 41 Hägersten (SE)
(86) International application number: PCT/SE2004/000876
(87) International publication number: WO 2004/109152

(56) References cited:
- DE-C1- 19 929 417
- US-A- 2 911 962
- US-A- 4 021 214
- US-A- 4 731 998
- US-A- 5 203 293
- US-A- 5 678 516
- US-A- 5 722 909

## Description

### BACKGROUND TO THE INVENTION, AND STATE OF THE ART

The present invention relates to an engine-powered vehicle according to the preamble of claim 1. Such a vehicle is disclosed in document US-A-4 731 998.

Vehicles are commonly powered by an engine which is often also used for driving one or more auxiliary units. Examples of such auxiliary units are a generator, a cooling fan, a coolant pump, a compressor for an air conditioning system, a hydraulic pump for a PTO, etc. In cases where the engine is a combustion engine, driving motion from the crankshaft of the combustion engine is usually transmitted to one or more such auxiliary units via an output shaft and a belt transmission. The auxiliary units may be mounted on the engine or at other points in the vehicle which are adjacent to the output shaft from the engine.

Combustion engines in operation give rise to a great variety of different movements. Combustion engines are therefore usually provided with suspension which substantially prevents propagation of vibrations and torsional movements from the engine to the chassis of the vehicle. However, it is significantly more difficult to prevent propagation of engine movements to auxiliary units which are driven by the engine via the engine's output shaft and driving belt transmission. This means that auxiliary units in operation are subject substantially continuously to engine movements such as vibrations, with consequent risk of shortening the service life of the auxiliary units. The belt transmission is also subject to considerable wear due to such transmitted engine movements.

### SUMMARY OF THE INVENTION

The object of the present invention is to provide an engine-powered vehicle whereby the propagation of movements from the engine to auxiliary units and sensitive portions of the motion transmitting mechanism is effectively prevented.

This object is achieved with the engine-powered vehicle of the kind mentioned in the introduction which is characterised by the features indicated in the characterising part of claim 1. As the auxiliary unit in that case is mounted on a member which is isolated from vibrations and torsional movements arising from the engine, substantially no engine movements are transmitted to the auxiliary unit via the member. The engine movements which may be transmitted to the auxiliary unit via the motion-transmitting mechanism are also considerably reduced if the motion transmitting mechanism's second portion which is connected to the auxiliary unit is also mounted on said member. This is a way of ensuring that no relative movements occur between the second portion of the motion transmitting mechanism and the auxiliary unit. As both the auxiliary unit and the second portion of the motion transmitting mechanism are thus substantially protected from engine movements such as vibrations, the result is longer service life as compared with auxiliary units and motion transmitting mechanisms mounted in a conventional manner.

According to a preferred embodiment of the present invention, said member forms part of the vehicle's chassis. Conventional combustion engines in vehicles are usually suspended in a frame structure which forms part of the vehicle's chassis. The suspension normally comprises a number of suspension means which are fastened at suitable points between the engine and the frame structure so that propagation of engine movements to the chassis is substantially prevented. Such an engine suspension thus substantially isolates the chassis from engine movements. This means that the auxiliary unit and said second portion of the motion transmitting mechanism can in such cases be mounted on substantially any desired member of the vehicle's chassis. Heavy vehicles usually have a frame structure with two elongate side-members which are connected by a multiplicity of transverse members. In such cases one of the transverse members may with advantage be used for mounting the auxiliary unit and the second portion of the motion transmitting mechanism.

According to a preferred embodiment of the present invention, said second portion of the motion transmitting mechanism comprises a first pulley, a second pulley and a driving belt adapted to transmitting rotary motion from the first pulley to the second pulley. Such a belt transmission may be used for driving one or more auxiliary units. In such cases the two pulleys of the belt transmission are both mounted on the transverse member, thereby ensuring that no relative movements occur between the pulleys. Wear on the pulleys and the driving belt is thereby considerably reduced.

According to a preferred embodiment of the present invention, the motion transmitting mechanism comprises a first portion which itself comprises means for preventing propagation of engine movements from the engine to said second portion of the motion transmitting mechanism, thereby ensuring that no vibrations or torsional movements are transmitted to the auxiliary unit from the engine via the motion transmitting mechanism. At the same time, the first portion of the motion transmitting mechanism also protects the second portion of the motion transmitting mechanism from vibrations and torsional movements from the engine. The first portion of the motion transmitting mechanism may comprise a shaft, and said means may provide radial mobility of the shaft between a first connection to the engine and a second connection to the second portion of the motion transmitting mechanism. Such radial mobility effectively prevents propagation of engine movements via said shaft from the crankshaft to the second portion of the motion transmitting mechanism. Said means may comprise an articulation of the shaft which is arranged between the first connection and the second connection. Propagation of relative movements between the crankshaft and the second portion of the motion transmitting mechanism in a radial direction via the shaft to the second portion of the motion transmitting mechanism is thus effectively prevented.

According to a preferred embodiment of the present invention, the shaft comprises a second connection to the first pulley. In this case the shaft and the first pulley may be connected by splined connection so as to allow a certain axial mobility between the shaft and the first pulley. A certain axial mobility may perhaps be necessary for allowing said radial mobility of the shaft. The shaft may be connected to said member of the vehicle by a fastening element. The fastening element will with advantage be fitted in the vicinity of the shaft's connection to the first pulley. The result is that the first pulley and the shaft have in the connection region a substantially fixed position relative to the member. The fastening element comprises with advantage a bearing in which the shaft is supported for rotation.

According to a preferred embodiment of the present invention, the second pulley is mounted on the auxiliary unit, thereby providing the auxiliary unit with a simple and reliable drive. In this case a number of auxiliary units which have second pulleys may be fitted in a common plane such that they can be driven by a single driving belt. With advantage, the shaft and the auxiliary unit are mounted on the transverse member via a common fastening element, thereby ensuring that no relative movements occur between that portion of the shaft and the auxiliary unit. The belt transmission arranged between the shaft and the auxiliary unit is thus guaranteed protection from vibrations and torsional movements arising from the engine.

### BRIEF DESCRIPTION OF THE DRAWINGS

Preferred embodiments of the invention are described below by way of examples with reference to the attached drawings, in which:
- Fig. 1: depicts an arrangement for driving an auxiliary unit according to a first embodiment of the invention,
- Fig. 2: depicts the arrangement in Fig. 1 as seen from an opposite side,
- Fig. 3: depicts an arrangement for driving an auxiliary unit according to a second embodiment of the invention, and
- Fig. 4: depicts the arrangement in Fig. 3 as seen from above.

### DETAILED DESCRIPTION OF PREFERRED EMBODIMENTS OF THE INVENTION

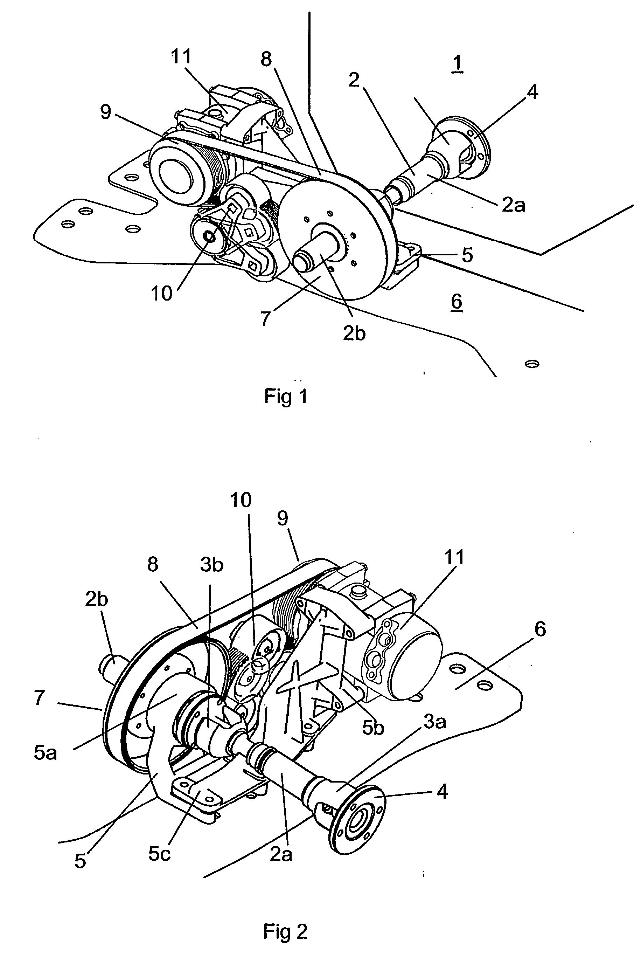

Fig. 1 depicts schematically a combustion engine 1 of a vehicle. The combustion engine 1 comprises a crankshaft (not depicted) which is intended to be connected to an output shaft 2. The crankshaft is connected via a fastening element 4 and a first articulation 3a to a first shaft portion 2a of the output shaft 2. The first shaft portion 2a has its opposite end connected to a second articulation 3b (see Fig. 2). The second articulation 3b has its opposite end connected to a second shaft portion 2b of the output shaft 2. The second shaft portion 2b is mounted by means of a fastening element 5 on a transverse member 6 of the vehicle's chassis. The fastening element 5 comprises an annular fastening portion 5a with, arranged inside it, a bearing in which the second shaft portion 2b is supported for rotation. The second shaft portion 2b is connected to a first pulley 7 of a belt transmission via, for example, a splined connection. The rotary motion of the second shaft portion 2b will thus be converted to a corresponding rotary motion of the first pulley 7. The splined connection allows a certain axial displacement of the second shaft portion 2b relative to the first pulley 7. The rotary motion of the first pulley 7 is transmitted via a driving belt 8 to a second pulley 9.

A belt tensioner device 10 is adapted to providing the driving belt 8 with a suitable tension. The second pulley 9 is connected to an auxiliary unit 11 which is adapted to being driven by the vehicle's engine 1. In this case the auxiliary unit is a compressor 11 for an air conditioning system. The second shaft portion 2b is also connected, with advantage, at its outer end to an auxiliary unit in the form of an undepicted cooling fan. The fastening element 5 also comprises a fastening portion 5b which is provided with holes for accommodating bolts to enable the compressor 11 to be fitted. The fastening element 5 also comprises a lower base portion 5c which has a multiplicity of holes for accommodating bolts to enable the fastening element 5 to be fitted to the member 6. The fastening element 5, via the annular portion 5a, holds the second shaft portion 2b in a substantially fixed position relative to the member 6. As the first pulley 7 is arranged round the second shaft portion 2b and adjacent to the annular fastening portion 5a, the first pulley 7 will also be arranged for rotation in a substantially fixed position relative to the member 6. As the second pulley 9 is mounted on the compressor 11, the second pulley 9 will also be arranged for rotation in a substantially fixed position relative to the member 6 via the fastening portion 5b. The fastening element 5 thus effects fastening of the second shaft portion 2b, the first pulley 7, the driving belt 8, the second pulley 9 and the compressor 11 so that they are assuredly held in a fixed position relative to one another and to the member 6.

During operation of the combustion engine 1, unavoidable engine movements such as vibrations and torsional movements occur. The combustion engine 1 has suspension in the vehicle's chassis in such a way that propagation of engine movements to the chassis and hence to said transverse member 6 is substantially prevented. Movements from the combustion engine 1 are nevertheless inevitably propagated to the fastening element 4 via the crankshaft. However, the fastening element 4 has the possibility, via the first articulation 3a, of moving in a radial direction relative to the first shaft portion 2a. Transmission of movements of the fastening element 4 to the first shaft portion 2a is thus at least partly prevented. As the first shaft portion 2a comprises a connection to the second shaft portion 2b via a second articulation 3b, the first shaft portion 2a is able to move relative to the second shaft portion 2b, thereby preventing any propagated engine movements in the first shaft portion 2a from being transmitted to the second shaft portion 2b, which is thus firmly mounted relative to the transverse member 6. The first pulley 7, which is thus connected to the second shaft portion 2b, is thus subject to substantially no engine movements. It is thus assured that no engine movements will be transmitted to the compressor 11 via the driving belt 8 and the second pulley 9. This means that neither the belt transmission 7-9 nor the compressor 11 are subject to movements which derive from the engine. The result is likely to be that both the belt transmission 7-9 and the compressor 11 have a longer service life than corresponding similar components fitted in a vehicle in a conventional manner. The fact that both the belt transmission 7-9 and the compressor 11 are mounted on the same member 6 also means that they are not subject to any mutual movements deriving from the vehicle when the latter is in motion on an uneven running surface.

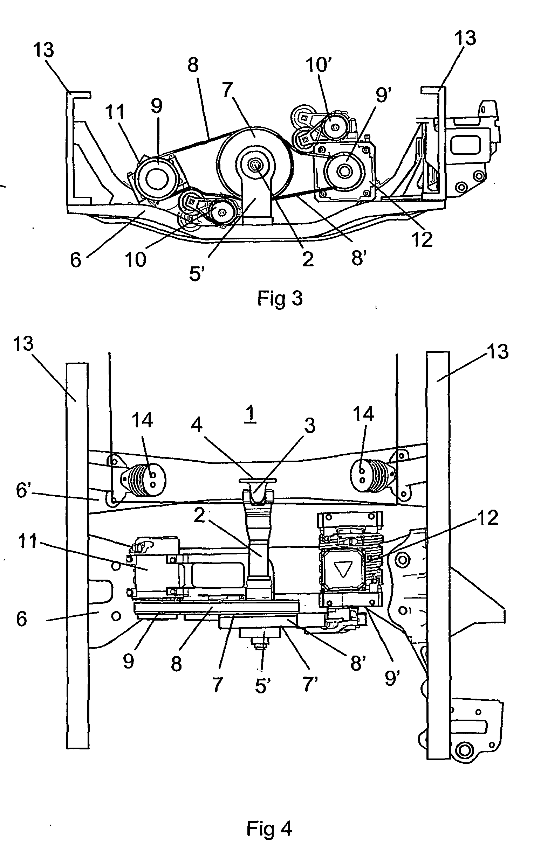

Figures 3 and 4 depict an embodiment with two auxiliary units 11, 12 which are adapted to being driven by the vehicle's engine 1. Here again, the first auxiliary unit is a compressor 11 for a ventilation system and the second auxiliary unit is a generator 12 for a vehicle which is provided with refrigeration space. Another auxiliary unit may be a power offtake from a PTO, e.g. in the form of a hydraulic pump. The vehicle depicted has a frame structure with two parallel longitudinal side-members 13 and a number of transverse members 6, 6' which connect the elongate members. A schematically depicted combustion engine 1 is suspended, via suspension means 14, on the transverse member 6'. This transverse member 6' is arranged adjacent to the transverse member 6 on which the auxiliary units 11, 12 are mounted. An undepicted crankshaft of the engine 1 is connected to an output shaft 2 via a fastening element 4 and an articulation 3a. The output shaft 2 has an outer end rotatably mounted on the member 6 via a fastening element 5'. The fastening element 5' comprises an undepicted bearing which allows rotation of the shaft 2. A pulley 7 is mounted on the shaft 2 to drive, via a driving belt 8, a pulley 9 which is mounted on the compressor 11. A further pulley 7' is mounted on the shaft 2 to drive, via a further driving belt 8', a pulley 9' which is mounted on the generator 12. In this case the compressor 11 and the generator 12 are mounted on the member 6 via separate fastening elements.

During operation of the combustion engine 1, unavoidable engine movements occur. The suspension means 14 prevent propagation of the engine's movements to the transverse member 6'. The transverse member 6 thus does not receive any engine movements via the transverse member 6' and the longitudinal frame elements 13. Movements from the combustion engine 1 are nevertheless inevitably propagated from the crankshaft to the fastening element 4. However, the fastening element 4 is enabled, by the articulation 3, to move in a radial direction relative to the shaft 2, thereby substantially preventing transmission of vibrations from the fastening element 4 to the shaft 2. The shaft 2 is thus rotatably mounted on the transverse member 6 via the fastening element 5'. The pulleys 7, 7' thus connected to the shaft 2 are therefore subject to substantially no engine movements. Nor do the two belt transmissions 7-9, 7'-9' propagate substantially any engine movements to the respective auxiliary units 11, 12. The two belt transmissions 7-9, 7'-9' and the auxiliary units 11, 12 are thus subject to substantially no movements such as vibrations deriving from the engine 1.

The invention is in no way limited to the embodiments described in the drawings but may be varied freely within the scopes of the claims.

## Claims

1. An engine-powered vehicle whereby the vehicle comprises an engine (1), an auxiliary unit (11,12) adapted to being driven by the engine (1), and a motion transmitting mechanism (2-9) adapted to transmitting driving motion from the engine (1) to the auxiliary unit (11, 12), and a beam (6) which is isolated from movements arising from said engine (1), whereby the auxiliary unit (11, 12) and at least a second portion of the motion transmitting mechanism (7-9) which is connected to the auxiliary unit (11,12) are mounted on the beam (6), **characterised in that** the motion transmitting mechanism comprises a first portion (2, 3) with a shaft (2) and at least one articulation (3, 3a, 3b) providing radial mobility of the shaft (2) between a first connection to the engine (1) and a second connection to the second portion of the motion transmitting mechanism (7-9).

2. An engine-powered vehicle according to claim 1, **characterised in that** said beam (6) forms part of the vehicle's chassis.

3. An engine-powered vehicle according to claim 1 or 2, **characterised in that** the shaft (2) is connected via a first articulation (3a) and a fastening element (4) to a crankshaft of the engine (1)

4. An engine-powered vehicle according to claim 3, **characterised in that** the shaft (2) has a first shaft portion (2a) connected to a second shaft portion (2b) of said shaft (2) via a second articulation (3b).

5. An engine-powered vehicle according to any of claims 1 to 4, **characterised in that** said second portion of the motion transmitting mechanism comprises a first pulley (7, 7'), a second pulley (9, 9') and a driving belt (8, 8') which is adapted to transmitting rotary motion from the first pulley (7, 7') to the second pulley (9, 9').

6. An engine-powered vehicle according to claim 5, **characterised in that** the shaft (2) comprises a second connection to the first pulley (7, 7').

7. An engine-powered vehicle according to claim 5 or 6, **characterised in that** the second shaft portion (2b) is connected with the first pulley (7) via a splined connection.

8. An engine-powered vehicle according to any one of claims 1 to 7, **characterised in that** the shaft (2) is connected to said beam (6) of the vehicle via a fastening element (5, 5').

9. An engine-powered vehicle according to any one of claims 5 to 8 **characterised in that** the second pulley (9, 9') is mounted on the auxiliary unit (11, 12).

10. An engine-powered vehicle according to any one of claims 1 to 9, **characterised in that** the shaft (2) and the auxiliary unit (11, 12) are mounted on said beam (6) of the vehicle via a common fastening element (5).

## Patentansprüche

1. Motorgetriebenes Fahrzeug, wobei das Fahrzeug umfasst:
- einen Motor (1),
- eine Zusatzvorrichtung (11, 12), die dazu ausgelegt ist, durch den Motor angetrieben zu werden, und
- eine Bewegungsübertragungsvorrichtung (2-9), die dazu ausgelegt ist, eine Antriebsbewegung von dem Motor (1) zu der Zusatzvorrichtung (11, 12) zu übertragen, und
- einen Träger (6), der von den vom Motor (1) herrührenden Bewegungen isoliert ist,
wobei die Zusatzvorrichtung (11, 12) und wenigstens ein zweiter Abschnitt der Bewegungsübertragungsvorrichtung (7-9), der mit der Zusatzvorrichtung (11, 12) verbunden ist, an dem Träger (6) angebracht sind,
**dadurch gekennzeichnet, dass** die Bewegungsübertragungsvorrichtung einen ersten Abschnitt (2, 3) mit einer Welle (2) und wenigstens einem Gelenk (3, 3a, 3b) aufweist, das eine radiale Bewegungsfreiheit der Welle (2) zwischen einer ersten Verbindung mit dem Motor (1) und einer zweiten Verbindung mit dem zweiten Abschnitt der Bewegungsübertragungsvorrichtung (7-9) vorsieht.

2. Motorgetriebenes Fahrzeug nach Anspruch 1,
**dadurch gekennzeichnet, dass** der Träger (6) ein Teil des Fahrzeugchassis bildet.

3. Motorgetriebenes Fahrzeug nach Anspruch 1 oder 2,
**dadurch gekennzeichnet, dass** die Welle (2) mittels einem ersten Gelenk (3a) und einem Befestigungselement (4) mit einer Kurbelwelle des Motors (1) verbunden ist.

4. Motorgetriebenes Fahrzeug nach Anspruch 3,
**dadurch gekennzeichnet, dass** die Welle (2) einen ersten Wellenabschnitt (2a) aufweist, der mittels einem zweiten Gelenk (3b) mit einem zweiten Wellenabschnitt (2b) der Welle (2) verbunden ist.

5. Motorgetriebenes Fahrzeug nach einem der Ansprüche 1 bis 4,
**dadurch gekennzeichnet, dass** der zweite Abschnitt der Bewegungsübertragungsvorrichtung eine erste Riemenscheibe (7, 7'), eine zweite Riemenscheibe (9, 9') und einen Antriebsriemen (8, 8') aufweist, der dazu ausgelegt ist, eine Drehbewegung von der ersten Riemenscheibe (7, 7') zu der zweiten Riemenscheibe (9, 9') zu übertragen.

6. Motorgetriebenes Fahrzeug nach Anspruch 5,
**dadurch gekennzeichnet, dass** die Welle (2) eine zweite Verbindung zu der ersten Riemenscheibe (7, 7') aufweist.

7. Motorgetriebenes Fahrzeug nach Anspruch 5 oder 6,
**dadurch gekennzeichnet, dass** der zweite Wellenabschnitt (2b) mittels einer kerbverzahnten Verbindung mit der ersten Riemenscheibe (7) gekoppelt ist.

8. Motorgetriebenes Fahrzeug nach einem der Ansprüche 1 bis 7,
**dadurch gekennzeichnet, dass** die Welle (2) mittels einem Befestigungselement (5, 5') mit dem Träger (6) des Fahrzeugs gekoppelt ist.

9. Motorgetriebenes Fahrzeug nach einem der Ansprüche 5 bis 8,
**dadurch gekennzeichnet, dass** die zweite Riemenscheibe (9, 9') an der Zusatzvorrichtung (11, 12) angebracht ist.

10. Motorgetriebenes Fahrzeug nach einem der Ansprüche 1 bis 9,
**dadurch gekennzeichnet, dass** die Welle (2) und die Zusatzvorrichtung (11, 12) mittels einem gemeinsamen Befestigungselement (5) an dem Träger (6) des Fahrzeugs angebracht sind.

## Revendications

1. Véhicule motorisé, le véhicule comprenant un moteur (1), une unité auxiliaire (11, 12) conçue pour être entraînée par le moteur (1), et un mécanisme de transmission de mouvement (2-9) destiné à transmettre le mouvement d'entraînement du moteur (1) à l'unité auxiliaire (11, 12), et une poutre (6) isolée des mouvements provenant dudit moteur (1), l'unité auxiliaire (11, 12) et au moins une seconde partie du mécanisme de transmission de mouvement (7-9) reliée à l'unité auxiliaire (11, 12) sont montées sur la poutre (6), **caractérisé en ce que** le mécanisme de transmission de mouvement comprend une première partie (2, 3) équipée d'un arbre (2) et au moins une articulation (3, 3a, 3b) assurant la mobilité radiale de l'arbre (2) entre une première liaison avec le moteur (1) et une seconde liaison avec la seconde partie du mécanisme de transmission de mouvement (7-9).

2. Véhicule motorisé selon la revendication 1, **caractérisé en ce que** ladite poutre (6) fait partie du châssis du véhicule.

3. Véhicule motorisé selon la revendication 1 ou 2, **caractérisé en ce que** l'arbre (2) est relié, par l'intermédiaire d'une première articulation (3a) et d'un élément de fixation (4), à un vilebrequin du moteur (1).

4. Véhicule motorisé selon la revendication 3, **caractérisé en ce que** l'arbre (2) présente une première partie (2a) reliée à une seconde partie (2b) dudit arbre (2) par l'intermédiaire d'une seconde articulation (3b).

5. Véhicule motorisé selon l'une quelconque des revendications 1 à 4, **caractérisé en ce que** ladite seconde partie du mécanisme de transmission de mouvement comprend une première poulie (7, 7'), une seconde poulie (9, 9') et une courroie d'entraînement (8, 8') destinée à transmettre un mouvement de rotation de la première poulie (7, 7') à la seconde poulie (9, 9').

6. Véhicule motorisé selon la revendication 5, **caractérisé en ce que** l'arbre (2) comprend une seconde liaison avec la première poulie (7, 7').

7. Véhicule motorisé selon la revendication 5 ou 6, **caractérisé en ce que** la seconde partie (2b) de l'arbre est reliée à la première poulie (7) par l'intermédiaire d'une liaison cannelée.

8. Véhicule motorisé selon l'une quelconque des revendications 1 à 7, **caractérisé en ce que** l'arbre (2) est relié à ladite poutre (6) du véhicule par l'intermédiaire d'un élément de fixation (5, 5').

9. Véhicule motorisé selon l'une quelconque des revendications 5 à 8, **caractérisé en ce que** la seconde poulie (9, 9') est montée sur l'unité auxiliaire (11, 12).

10. Véhicule motorisé selon l'une quelconque des revendications 1 à 9, **caractérisé en ce que** l'arbre (2) et l'unité auxiliaire (11, 12) sont montés sur ladite poutre (6) du véhicule par l'intermédiaire d'un élément de fixation commun (5).
